# EUROPÄISCHE PATENTANMELDUNG

(11) **EP 4 610 002 A1**
(43) Veröffentlichungstag der Anmeldung: **03.09.2025**
(21) Anmeldenummer: 25161045.7
(22) Anmeldetag: 28.02.2025
(51) Int. Cl.: B25J 9/16, B25J 15/06, B25J 15/00

(54) **VERFAHREN ZUM HANDHABEN EINES GREIFOBJEKTES MITTELS EINER UNTERDRUCKHANDHABUNGSVORRICHTUNG UND UNTERDRUCKHANDHABUNGSVORRICHTUNG**

(30) Priorität: 01.03.2024 DE 102024105992
(71) Anmelder: J. Schmalz GmbH, 72293 Glatten (DE)
(72) Erfinder: Heinzmann, Bernd, 72290 Loßburg (DE); Frey, Matthias, 72172 Sulz-Dürrenmettstetten (DE); Stehle, Martin, 72401 Haigerloch (DE); Reinisch, Hermann, 72175 Dornhan (DE)
(74) Vertreter: DREISS Patentanwälte PartG mbB

(57) **Zusammenfassung**

Die Erfindung betrifft ein Verfahren zum Handhaben eines Greifobjektes (42) mittels einer Unterdruckhandhabungsvorrichtung (10), umfassend einen Sauggreifer (12) mit einer Mehrzahl von einzeln aktivierbaren Saugstellen (20) und eine Unterdruckerzeugungseinrichtung (14), das Verfahren umfassend das Bereitstellen eines Referenz-Unterdruckwerts pU_{ref}, welcher einen Unterdruck pUₜₑₛₜ repräsentiert, der sich bei Aktivierung einer Anzahl nₜₑₛₜ an Saugstellen bei freiem Ansaugen ohne ein Greifobjekt in einem Ansaugströmungsweg einstellt, wobei nₜₑₛₜ kleiner oder gleich der Differenz aus n_{greif} und n_{erf} ist, wobei n_{greif} die Anzahl an Saugstellen S_{greif} repräsentiert, mittels welchen das Greifobjekt zum Greifen angesaugt werden soll, wobei n_{erf} die Anzahl an minimal erforderlichen Saugstellen repräsentiert, um das Greifobjekt sicher an dem Sauggreifer (12) zu halten, Aktivieren der Saugstellen S_{greif} und Ansaugen des Greifobjektes, Messen eines Unterdruckwertes pUᵢₛₜ, welcher einen sich nach dem Ansaugen des Greifobjektes mit den Saugstellen S_{greif} in dem Ansaugströmungsweg einstellenden Unterdruck repräsentiert und Vergleichen des Unterdruckwerts pUᵢₛₜ mit dem Referenz-Unterdruckwert pU_{ref}.

## Beschreibung

Die Erfindung betrifft ein Verfahren zum Handhaben eines Greifobjektes mittels einer Unterdruckhandhabungsvorrichtung sowie eine hierfür ausgebildete Unterdruckhandhabungsvorrichtung.

Unterdruckhandhabungsvorrichtungen sind in vielfältiger Art und Weise aus dem Stand der Technik bekannt und werden beispielsweise dazu verwendet, um gestapelte, starre und/oder biegeschlaffe Gegenstände zu handhaben. Derartige Unterdruckhandhabungsvorrichtungen weisen üblicherweise einen Sauggreifer und eine Unterdruckerzeugungseinrichtung zur Versorgung des Sauggreifers mit Unterdruck auf.

Beispielsweise sind sogenannte Flächensauggreifer bekannt, welche an einer Saugseite eine Mehrzahl von Saugstellen zum Ansaugen eines Gegenstands aufweisen. Die Saugstellen können beispielsweise durch Durchgangsöffnungen in einer Saugplatte bereitgestellt sein. Es ist auch denkbar, dass die Durchgangsöffnungen mit Saugkörpern, bspw. Elastomersaugern, besetzt sind.

Um das Greifen von unterschiedlich geformten und/oder unterschiedlich großen Gegenständen auf effiziente Weise zu ermöglichen, sind Flächensauggreifer bekannt, bei denen die Saugstellen einzeln aktivierbar sind. Zum Greifen eines Gegenstands kann dann beispielsweise lediglich eine Teilmenge der Saugstellen aktiviert werden, insbesondere diejenigen, welche innerhalb einer durch die Außenkontur des Greifobjektes definierten Fläche liegen.

Bei solchen Sauggreifern mit einzeln aktivierbaren Saugstellen ist es bekannt, jede Saugstelle mit einem eigenen Sensor zu überwachen, um auf diese Weise bspw. Fehlfunktionen zu detektieren. Ein solcher Aufbau ist jedoch in der Konstruktion aufwändig und teuer.

Hiervon ausgehend beschäftigt sich die Erfindung mit der Aufgabe, das Handhaben von Greifobjekten mittels Unterdruckhandhabungsvorrichtungen der eingangs genannten Art zu verbessern. Insbesondere soll auf einfache konstruktive Weise ein zuverlässiges und sicheres Greifen von Greifobjekten erzielt werden.

Diese Aufgabe wird erfindungsgemäß durch ein Verfahren mit den Merkmalen des Anspruchs 1 gelöst. Hierbei handelt es sich um ein Verfahren zum Handhaben eines Greifobjekts, insbesondere Werkstücks, mittels einer Unterdruckhandhabungsvorrichtung. Das Verfahren ist insofern auch ein Verfahren zum Betreiben einer Unterdruckhandhabungsvorrichtung.

Die Unterdruckhandhabungsvorrichtung umfasst einen Sauggreifer mit einer Mehrzahl von einzeln, **d.h.** voneinander unabhängig, aktivierbaren und wieder deaktivierbaren Saugstellen. Die Saugstellen können insofern voneinander unabhängig in eine Aktivkonfiguration (Ansaugkonfiguration) und in eine Passivkonfiguration überführt werden. In der Aktivkonfiguration ist eine Ansaugströmung durch die Saugstelle freigegeben und somit insbesondere ein an der Saugstelle anliegendes Greifobjekt ansaugbar. In der Passivkonfiguration ist eine Ansaugströmung durch die Saugstelle unterbrochen, es wird also keine Luft durch die Saugstelle angesaugt.

Die Unterdruckhandhabungsvorrichtung umfasst außerdem eine Unterdruckerzeugungseinrichtung zur Versorgung des Sauggreifers mit Unterdruck. Die Unterdruckerzeugungseinrichtung ist durch einen Ansaugströmungsweg mit dem Sauggreifer, insbesondere mit den Saugstellen, strömungsverbunden, um dem Sauggreifer, insbesondere die Saugstellen, mit Unterdruck zu versorgen. Der Ansaugströmungsweg führt insbesondere von dem Sauggreifer, insbesondere von einer jeweiligen Saugstelle, in Richtung Unterdruckerzeugungseinrichtung. Der Ansaugströmungsweg kann durch Fluidleitungen verlaufen, welche den Sauggreifer mit der Unterdruckerzeugungseinrichtung verbinden. Die Unterdruckerzeugungseinrichtung kann verschieden ausgebildet sein, bspw. als Gebläse, Pumpe oder Ejektor, vorzugsweise Ejektor. Die Unterdruckerzeugungseinrichtung ist vorzugsweise derart ausgebildet, dass dann, wenn keine Saugstelle aktiviert ist, d.h. alle Saugstellen in der Passivkonfiguration sind, sich ein konstanter Unterdruck in dem Ansaugströmungsweg einstellt.

Die Unterdruckhandhabungsvorrichtung weist vorzugsweise außerdem eine Sensoreinrichtung zum Messen eines Unterdrucks in dem Ansaugströmungsweg auf. Die Sensoreinrichtung kann einen oder mehrere Drucksensoren umfassen. Die Sensoreinrichtung kann dazu ausgebildet sein, einen Unterdruck in der Unterdruckerzeugungseinrichtung zu messen, bspw. an einer Saugöffnung oder einer Saugkammer der Unterdruckerzeugungseinrichtung. Alternativ oder zusätzlich kann die Sensoreinrichtung dazu ausgebildet sein, einen Unterdruck in einer Fluidleitung zwischen Sauggreifer und Unterdruckerzeugungseinrichtung zu messen. Alternativ oder zusätzlich kann die Sensoreinrichtung dazu ausgebildet sein, einen Unterdruck in dem Sauggreifer, bspw. einer Saugkammer des Sauggreifers, zu messen.

Die Unterdruckhandhabungsvorrichtung kann außerdem eine Steuereinrichtung zur Ansteuerung der Unterdruckerzeugungseinrichtung und/oder des Sauggreifers aufweisen. Die Steuereinrichtung kann insbesondere eine nicht-flüchtige Speichereinrichtung umfassen.

Der Sauggreifer ist - zur Ausführung des Verfahrens - derart ausgebildet, insbesondere fluidisch ausgelegt, dass bei freiem Ansaugen ohne Greifobjekt der in dem Ansaugströmungsweg vorherrschende Unterdruck von der Anzahl an aktivierten Saugstellen abhängt, wobei die gleiche Anzahl an aktivierten Saugstellen - unabhängig davon, welche Saugstellen der Mehrzahl von Saugstellen aktiviert sind - stets zu dem gleichen Unterdruck in dem Ansaugströmungsweg führt und wobei eine unterschiedliche Anzahl an aktivierten Saugstellen zu einem unterschiedlichen Unterdruck in dem Ansaugströmungsweg führt. Insofern besteht bei freiem Ansaugen ohne Greifobjekt insbesondere eine eineindeutige Zuordnung zwischen einer Anzahl an aktivierten Saugstellen und einem sich in Folge der Aktivierung dieser Anzahl an Saugstellen in einem Ansaugströmungsweg einstellenden Unterdruck. Eine solche Ausgestaltung kann beispielsweise dadurch realisiert sein, dass die Strömungswege von den einzelnen Saugstellen zu der Unterdruckerzeugungseinrichtung identisch ausgebildet sind, insbesondere identische Weglänge und identische Strömungsquerschnitte aufweisen. Es sind aber auch andere Ausgestaltungen denkbar. Die konkrete Ausgestaltung ist letztlich für das erfindungsgemäße Verfahren nicht wesentlich.

Weiterhin kann es vorteilhaft sein, wenn der Sauggreifer derart ausgelegt ist, dass eine Änderung ΔpU des Unterdrucks im Ansaugströmungsweg, welche sich bei Aktivieren einer weiteren Saugstelle ergibt, größer als 10 mbar, insbesondere größer als 15 mbar, weiter insbesondere größer als 20 mbar ist, insbesondere zumindest bis ein Drittel der vorhandenen Saugstellen ausgefahren ist. Dies begünstigt eine zuverlässige Detektion einer Fehlfunktion oder eines Fehlgriffs einer Saugstelle.

Weitere optionale Ausgestaltungen und Vorteile der Unterdruckhandhabungsvorrichtung sind nachfolgend unter Bezugnahme auf die Unterdruckhandhabungsvorrichtung als solche beschrieben, sodass zur Vermeidung von Wiederholungen auf untenstehende Offenbarung hierzu verwiesen wird.

Das Verfahren umfasst die folgenden Schritte, insbesondere in der angegebenen Reihenfolge:
- Hinterlegen, insbesondere Speichern, eines Referenz-Unterdruckwerts pU_{ref} in einer nicht-flüchtigen Speichereinrichtung, beispielsweise einer nicht-flüchtigen Speichereinrichtung einer Steuereinrichtung der Unterdruckhandhabungsvorrichtung. Der Referenz-Unterdruckwert pU_{ref} repräsentiert einen Unterdruck pUₜₑₛₜ, welcher sich in dem Ansaugströmungsweg bei Aktivierung einer Anzahl nₜₑₛₜ an Saugstellen und bei freiem Ansaugen, d.h. ohne ein Greifobjekt anzusaugen, einstellt. Der Referenz-Unterdruckwert pU_{ref} kann dem in dem Ansaugströmungsweg vorherrschenden Unterdruck pUₜₑₛₜ, insbesondere einem in dem Ansaugströmungsweg gemessenen Unterdruck, entsprechen. Es ist auch denkbar, dass der Referenz-Unterdruckwert pU_{ref} ein von dem Unterdruck pUₜₑₛₜ abgeleiteter Unterdruckwert ist. Beispielsweise ist es denkbar, dass es sich bei dem Referenz-Unterdruckwert pU_{ref} um den Unterdruck pUₜₑₛₜ korrigiert, insbesondere reduziert, um einen Korrekturfaktor pUₖₒᵣᵣ handelt.
- Aktivieren der Saugstellen S_{greif} und Ansaugen des Greifobjektes mit den Saugstellen S_{greif}.
- Ermitteln eines Unterdruckwertes pUᵢₛₜ, der den Unterdruck repräsentiert, welcher sich nach dem Ansaugen des Greifobjektes mit den Saugstellen S_{greif} in dem Ansaugströmungsweg einstellt. Das Ermitteln des Unterdruckwertes pUᵢₛₜ umfasst insbesondere das Messen des Unterdruckwertes mittels der Sensoreinrichtung.
- Vergleichen des Unterdruckwerts pUᵢₛₜ mit dem Referenz-Unterdruckwert pU_{ref}.
- (Optional) Verlagern des Greifobjektes mit dem Sauggreifer, insbesondere mittels eines mit dem Sauggreifer gekoppelten Manipulators.

Erfindungsgemäß ist die Anzahl nₜₑₛₜ gemäß folgender Formel berechnet:
nₜₑₛₜ ≤ n_{greif} - n_{erf}, insbesondere nₜₑₛₜ = n_{greif} - n_{erf}. Insofern ist ntest kleiner oder gleich, insbesondere gleich, der Differenz aus n_{greif} und n_{erf}.

n_{greif} repräsentiert dabei die Anzahl an Saugstellen S_{greif} des Sauggreifers, mittels welchen das Greifobjekt später gegriffen werden soll. Insofern handelt es sich bei der Anzahl n_{greif} bzw. den Saugstellen S_{greif} um die gewünschten Saugstellen, die zum Greifern des Greifobjektes aktiviert werden sollen. Wie nachfolgend erläutert, kann die Anzahl n_{greif} an Saugstellen bzw. die konkreten Saugstellen S_{greif} in Abhängigkeit einer Geometrie, insbesondere einer Außen- und/oder Innenkontur, des Greifobjektes ermittelt sein. Insbesondere kann es sich bei der Anzahl n_{greif} um die maximal mögliche Anzahl an Saugstellen handeln, mittels denen das Greifobjekt aufgrund seiner Geometrie gegriffen werden kann.

n_{erf} repräsentiert dabei die Anzahl an minimal erforderlichen Saugstellen, um das Greifobjekt sicher, d.h. mit einer vorgegebenen Haltekraft, zu halten. Die Anzahl n_{erf} ist insbesondere in Abhängigkeit eines Gewichts des Greifobjektes und/oder einer vorgegebenen Haltekraft ermittelt. Beispielsweise ist es denkbar, dass auf der Steuereinrichtung Greifobjekt-Daten, umfassend Informationen zu einem Gewicht des Greifobjektes, bereitgestellt werden und in Abhängigkeit der Greifobjekt-Daten die Anzahl n_{erf} ermittelt wird.

Der Referenz-Unterdruckwert pU_{ref} repräsentiert insofern den Unterdruck, der sich einstellen würde, wenn bei einem späteren Greifen des Greifobjektes mit den Saugstellen S_{greif} lediglich n_{greif} - n_{erf} an aktivierten Saugstellen das Greifobjektnicht oder zumindest nicht zuverlässig ansaugen würden bzw. lediglich n_{erf} der n_{greif} an aktivierten Saugstellen tatsächlich ansaugen. Dass nur eine Teilmenge der zum Greifen aktivierten Saugstellen S_{greif} zuverlässig ansaugt kann beispielsweise dann passieren, wenn das Greifobjekt nicht in der gewünschten Position relativ zu dem Sauggreifer ausgerichtet ist und/oder das Greifobjekt lokale Aussparungen oder Unebenheiten aufweist, die ein Ansaugen erschwert (weitere Details siehe unten). Der Referenz-Unterdruckwert pU_{ref} repräsentiert insofern einen Grenz-Unterdruck, welcher bei späterer Aktivierung der Saugstellen S_{greif} mindestens erzielt werden muss, um sicherzugehen, dass das Greifobjekt sicher gegriffen ist.

Die Anzahl n_{greif}, insbesondere die Saugstellen S_{greif}, und die Anzahl n_{erf} können insbesondere auf der Speichereinrichtung bereitgestellt werden. Insofern kann das Verfahren, insbesondere vor dem Bereitstellen des Referenz-Druckwertes das Bereitstellen, insbesondere Hinterlegen, der Anzahl n_{erf} an Saugstellen, welche für eine sichere Halterung des Greifobjektes erforderlich ist und der Anzahl n_{greif} an Saugstellen S_{greif}, mittels welchen das Greifobjekt später gegriffen werden soll, umfassen.

Das vorgeschlagene Verfahren ermöglicht es, mit nur einem Sensor abzuschätzen, ob das Greifobjekt sicher von dem Sauggreifer gehalten ist. Bei dem Sensor kann es sich insbesondere um einen solchen Drucksensor handeln, der ohnehin in der Unterdruckerzeugungseinrichtung vorhanden ist, was einen konstruktiven Aufwand weiter reduziert. Insbesondere kann aus einem geringeren gemessenen Unterdruckwert pUᵢₛₜ als dem Referenz-Unterdruckwert pU_{ref} abgelesen werden, dass weniger als die minimal erforderlichen Saugstellen n_{erf} zuverlässig greifen (also mehr Saugstellen als die Differenz aus n_{greif} und nₜₑₛₜ nicht richtig ansaugen) und somit ein sicheres Halten des Greifobjektes potentiell gefährdet ist.

Im Rahmen einer vorteilhaften Weiterbildung kann dann, wenn der nach dem Ansaugen des Greifobjekts mit den Saugstellen S_{greif} gemessene Unterdruckwert pUᵢₛₜ geringer ist als der Referenzunterdruckwert pU_{ref} (also der Unterdruck kleiner ist) ein Fehlersignal, insbesondere Fehlermeldung, ausgegeben werden. Das Fehlersignal kann beispielsweise eine Steuereinrichtung der Unterdruckhandhabungsvorrichtung dazu veranlassen, das Ansaugen des Greifobjektes zu unterbrechen und insbesondere das Greifobjekt nicht zu verlagern.

Es ist auch denkbar, dass dann, wenn der nach dem Ansaugen des Greifobjekts mit den Saugstellen S_{greif} gemessene Unterdruckwert pUᵢₛₜ größer als der Referenzunterdruckwert pU_{ref} ist, ein Freigabesignal ausgegeben wird. Das Freigabesignal kann beispielsweise eine Steuereinrichtung der Unterdruckhandhabungsvorrichtung dazu veranlassen, das Ansaugen des Greifobjektes fortzusetzen und/oder einen optionalen Arbeitsprozess (siehe unten) zu beginnen oder fortzusetzen.

Es ist denkbar, dass der Referenz-Unterdruckwert pU_{ref} für die Anzahl nₜₑₛₜ an Saugstellen in einer Datenbank der nicht-flüchtigen Speichereinrichtung hinterlegt ist. Beispielsweise ist es denkbar, dass auf der Speichereinrichtung eine Referenz-Datenbank hinterlegt ist, welche für jede Anzahl an aktivierten Saugstellen einen dieser Anzahl an aktivierten Saugstellen zugeordneten Unterdruckwert pUᵢₛₜ angibt, der den Unterdruck in dem Ansaugströmungsweg bei Aktivierung dieser Anzahl an Saugstellen und freiem Ansaugen repräsentiert. Die Referenz-Datenbank kann durch Referenzmessungen bereitgestellt sein, bspw. vor Inbetriebnahme der Unterdruckhandhabungsvorrichtung.

Vorzugsweise wird der Referenz-Unterdruckwert pU_{ref} aber durch eine Referenz-Messung, insbesondere unmittelbar vor dem Aktivieren der Saugstellen S_{greif}, ermittelt. Auf diese Weise können zeitliche und örtliche Schwankungen, bspw. aufgrund von Temperatur- und/oder Luftfeuchtigkeitseffekten oder Verschleißeffekten, berücksichtigt und insbesondere korrigiert werden. Darüber hinaus kann bspw. ein Verstopfen des Ansaugströmungswegs oder einer einzelnen Saugstelle detektiert werden.

Das Bereitstellen des Referenz-Unterdruckwerts umfasst insofern vorzugsweise (vor dem Aktivieren der Saugstellen S_{greif} zum Ansaugen des Greifobjektes):
- (optional) Bereitstellen der Anzahl n_{greif} und der Anzahl n_{erf}, insbesondere Hinterlegen der Anzahl n_{greif} und der Anzahl n_{erf} in einer nicht-flüchtigen Speichereinrichtung;
- Aktivieren einer nₜₑₛₜ entsprechenden Anzahl an Saugstellen Sₜₑₛₜ ohne ein Greifobjekt anzusaugen (freies Ansaugen);
- Ermitteln, insbesondere Messen mittels der Sensoreinrichtung, eines Unterdruckwerts pUₜₑₛₜ, welcher einen Unterdruck repräsentiert, der sich im Ansaugströmungsweg nach Aktivieren der nₜₑₛₜ Saugstellen (bei freiem Ansaugen) einstellt;
- Hinterlegen dieses Unterdruckwerts pUₜₑₛₜ oder eines von diesem Unterdruckwert pUₜₑₛₜ abgeleiteten Unterdruckwert, bspw. dieses Unterdruckwerts pUₜₑₛₜ reduziert um einen Korrekturfaktor pUₖₒᵣᵣ, als Referenz-Unterdruckwert pU_{ref} in der nicht-flüchtigen Speichereinrichtung.

Die Anzahl nₜₑₛₜ kann null sein. Insofern kann keine Saugstelle aktiviert werden. Die Anzahl nₜₑₛₜ kann größer als null sein.

Wie vorstehend erwähnt, ist es denkbar, dass die Anzahl nₜₑₛₜ an (Test-)Saugstellen Sₜₑₛₜ geringer ist als die Differenz zwischen n_{greif} und n_{erf}. Beispielsweise ist es denkbar, dass nₜₑₛₜ = n_{greif} - (n_{erf} + a) ist, wobei a eine natürliche Zahl größer gleich eins ist. Es kann also für die Referenz-Messung fingiert werden, dass mehr Saugstellen als tatsächlich für ein sicheres Greifen erforderlich sind. Auf diese Weise kann ein weiterer "Sicherheitspuffer" realisiert werden.

Alternativ oder zusätzlich ist es auch denkbar, dass dann, wenn die Differenz aus n_{greif} und n_{erf} größer ist als ein Schwellwert nₛ, lediglich die Anzahl nₛ als ntest an Saugstellen aktiviert wird. Insofern kann ntest = min (ns; ngreif - nerf) sein, wobei ns eine Zahl größer oder gleich eins ist. Auf diese Weise kann ein Energieverbrauch und ein Verschleiß bei der Referenz-Messung reduziert werden und dennoch eine ausreichend zuverlässige Risikoabschätzung erfolgen. Eine solche Ausgestaltung des Verfahrens kann insbesondere dann vorteilhaft sein, wenn der Sauggreifer derart ausgelegt ist, dass eine Änderung ΔpU des Unterdrucks in dem Ansaugströmungsweg, welche sich bei Aktivieren einer weiteren Saugstelle ergibt, mit steigender Anzahl an bereits aktivierten Saugstellen abnimmt.

Wie vorstehend erwähnt, kann n_{erf} in Abhängigkeit einer oder mehrerer Randbedingungen ermittelt werden. Insbesondere kann n_{erf} in Abhängigkeit eines Gewichts des Greifobjektes ermittelt werden (insbesondere je schwerer das Greifobjekt, desto größer n_{erf}). Alternativ oder zusätzlich kann n_{erf} in Abhängigkeit eines Materials des Greifobjektes ermittelt sein (bspw. kann bei porösen Materialien eine Anzahl n_{erf} größer sein als bei saugdichten Materialien). Alternativ oder zusätzlich kann n_{erf} in Abhängigkeit einer erforderlichen Haltekraft ermittelt sein, bspw. in Abhängigkeit von zu erwartenden Beschleunigungskräften oder Bearbeitungskräften während eines nach dem Ansaugen des Greifobjektes durchgeführten Arbeitsprozesses.

Die Anzahl n_{greif} und insbesondere die konkrete Auswahl S_{greif} der Saugstellen kann in Abhängigkeit einer Geometrie und optional des Gewichts des Greifobjektes ermittelt werden. Beispielsweise kann n_{greif} bzw. S_{greif} in Abhängigkeit einer Außenkontur des Greifobjektes ermittelt werden. Wie vorstehend erwähnt, kann es sich bei n_{erf} um die maximal mögliche Anzahl an Saugstellen handeln, mittels denen das Greifobjekt aufgrund seiner Geometrie gegriffen werden kann. Im Rahmen einer vorteilhaften Weiterbildung kann die Unterdruckhandhabungsvorrichtung eine Erfassungseinrichtung, bspw. Kamera, zum Aufnehmen eines Abbildes des Greifobjektes aufwiest. Dann ist es beispielsweise denkbar, dass das Verfahren das Aufnehmen eines Abbildes des Greifobjektes und sodann das Ermitteln einer Geometrie, insbesondere Außenkontur und/oder Innenkontur, des Greifobjektes, bspw. mittels Methoden der Bildverarbeitung, umfasst.

Die Erfindung betrifft auch eine Unterdruckhandhabungsvorrichtung mit den Merkmalen des Anspruchs 7. Die Unterdruckhandhabungsvorrichtung ist insbesondere zum Ausführen des vorstehend beschriebenen Verfahrens ausgebildet. Die Unterdruckhandhabungsvorrichtung umfasst einen Sauggreifer mit einer Mehrzahl von einzeln, d.h. voneinander unabhängig, aktivierbaren Saugstellen. Der Sauggreifer ist derart ausgebildet, insbesondere fluidisch ausgelegt, derart ausgebildet, insbesondere fluidisch ausgelegt, dass bei freiem Ansaugen ohne Greifobjekt der in dem Ansaugströmungsweg vorherrschende Unterdruck von der Anzahl an aktivierten Saugstellen abhängt, wobei die gleiche Anzahl an aktivierten Saugstellen - unabhängig davon, welche Saugstellen der Mehrzahl von Saugstellen aktiviert sind - stets zu dem gleichen Unterdruck in dem Ansaugströmungsweg führt und wobei eine unterschiedliche Anzahl an aktivierten Saugstellen zu einem unterschiedlichen Unterdruck in dem Ansaugströmungsweg führt. Insofern besteht bei freiem Ansaugen ohne Greifobjekt insbesondere eine eineindeutige Zuordnung zwischen einer Anzahl an aktivierten Saugstellen und einem sich in Folge der Aktivierung dieser Anzahl an Saugstellen in einem Ansaugströmungsweg einstellenden Unterdruck. Im vorliegenden Zusammenhang wird ein um bis zu ±5%, vorzugsweise um bis zu ±2%, abweichender Unterdruck noch als "gleicher Unterdruck" bezeichnet.

Die Unterdruckhandhabungsvorrichtung umfasst außerdem eine Unterdruckerzeugungseinrichtung zum Versorgen des Sauggreifers mit Unterdruck, bspw. in Form eines Gebläses, einer Pumpe oder eines Ejektors, vorzugsweise in Form eines Ejektors. Die Unterdruckerzeugungseinrichtung ist durch einen Ansaugströmungsweg mit dem Sauggreifer strömungsverbunden, um dem Sauggreifer mit Unterdruck zu versorgen. Der Ansaugströmungsweg führt insbesondere von dem Sauggreifer, insbesondere von einer jeweiligen Saugstelle, in Richtung Unterdruckerzeugungseinrichtung. Der Ansaugströmungsweg kann durch Fluidleitungen verlaufen, welche den Sauggreifer mit der Unterdruckerzeugungseinrichtung verbinden.

Die Unterdruckhandhabungsvorrichtung umfasst außerdem eine Steuereinrichtung zum Ansteuern der Unterdruckhandhabungsvorrichtung. Die Steuereinrichtung ist insbesondere dazu eingerichtet, das vorstehend beschriebene Verfahren durchzuführen. Die Steuereinrichtung umfasst vorzugsweise eine nicht-flüchtige Speichereinrichtung. Insbesondere können auch der nicht-flüchtigen Speichereinrichtung Steueranweisungen gespeichert sein, welche bei Ausführung die Steuereinrichtung dazu veranlassen, das vorstehend beschriebene Verfahren durchzuführen.

Die vorstehend im Zusammenhang mit dem Verfahren beschriebenen Vorteile und optionalen Merkmale können auch zur Ausgestaltung der Unterdruckhandhabungsvorrichtung dienen, sodass zur Vermeidung von Wiederholungen auf vorstehende Offenbarung hierzu verwiesen wird.

Im Rahmen einer vorteilhaften Weiterbildung ist der Sauggreifer derart ausgelegt ist, dass eine Änderung ΔpU_{0→1} des Unterdrucks in dem Ansaugströmungsweg, welche sich ergibt, wenn ausgehend von einer Ausgangskonfiguration, in welcher keine Saugstelle aktiviert ist, eine erste Saugstelle aktiviert wird, größer ist als eine Änderung ΔpU_{1→2} des Unterdrucks in dem Ansaugströmungsweg, welche sich bei Aktivieren einer weiteren Saugstelle ergibt. Auf diese Weise kann sichergestellt werden, dass der Unterschied zwischen einer aktivierten Saugstelle und keiner aktivierten Saugstelle zuverlässig detektierbar ist. Dies trägt der Überlegung Rechnung, dass bei nur einer maximal möglichen Saugstelle S_{greif} ein Fehlgriff gravierend ist, da dann unter Umständen überhaupt keine Greifkraft mehr bereitgestellt wird.

Weiterhin kann es vorteilhaft sein, wenn der Sauggreifer derart ausgelegt ist, dass - mit steigender Anzahl an bereits aktivierten Saugstellen - eine Änderung ΔpUₓ₊₁ des Unterdrucks im Ansaugströmungsweg, welche sich bei Aktivieren einer weiteren Saugstelle ergibt, abnimmt. Insofern kann beispielsweise eine Änderung ΔpU₁₊₁ des Unterdrucks im Ansaugströmungsweg bei Aktivierung einer zweiten Saugstelle (ausgehend von einer Konfiguration mit nur einer aktivierten Saugstelle) größer sein als eine Änderung ΔpU₂₊₁ des Unterdrucks im Ansaugströmungsweg bei Aktivieren einer dritten Saugstelle (ausgehend von einer Konfiguration mit zwei aktivierten Saugstellen).

Weiterhin kann es vorteilhaft sein, wenn der Sauggreifer derart ausgelegt ist, dass eine Änderung ΔpU des Unterdrucks im Ansaugströmungsweg, welche sich bei Aktivieren einer ersten oder einer weiteren Saugstelle ergibt, größer als 10 mbar, insbesondere größer als 15 mbar, weiter insbesondere größer als 20 mbar ist, insbesondere zumindest bis ein Drittel der vorhandenen Saugstellen ausgefahren ist. Dies begünstigt eine zuverlässige Detektion einer Fehlfunktion oder eines Fehlgriffs einer Saugstelle.

Vorzugsweise ist die Unterdruckerzeugungseinrichtung derart ausgebildet, dass in einer Ausgangskonfiguration, in welcher keine Saugstelle aktiviert ist, der Unterdruck im Ansaugströmungsweg konstant ist, d.h. eine Abweichung von einem Unterdruck-Sollwert kleiner als ± 5%, insbesondere kleiner als ± 1%, ist. Dies kann bei einer Ausgestaltung der Unterdruckerzeugungseinrichtung als Ejektor zur Erzeugung von Unterdruck aus Druckluft beispielsweise dadurch realisiert sein, dass ein Eingangs-(Über)druck der Druckluft am Ejektor veränderbar ist.

Der Sauggreifer kann unterschiedlich ausgebildet sein. Beispielsweise kann der Sauggreifer eine Mehrzahl von Saugöffnungen aufweisen, welche die Saugstellen bereitstellen. Die Saugöffnungen können einzeln, d.h. voneinander unabhängig, mit der Unterdruckerzeugungseinrichtung fluidisch verbindbar und trennbar sein, bspw. über eine entsprechend ausgebildete Ventilvorrichtung.

Im Rahmen einer vorteilhaften Ausgestaltung kann der Sauggreifer eine Mehrzahl von wiederholbar ein- und wieder ausfahrbaren Saugereinheiten aufweisen, welche jeweils eine Saugstelle bilden. Eine jeweilige Saugereinheit kann beispielsweise einen in einem Grundkörper des Sauggreifers verlagerbaren Hubkolben mit einem daran angeordneten Saugkörper, bspw. Elastomersaugkörper, aufweisen. In der ausgefahrenen Konfiguration der Saugereinheit kann dann die Saugstelle aktiviert sein, also eine Ansaugströmung durch die Saugereinheit, insbesondere durch den Saugkörper und den Hubkolben, freigegeben sein. In der eingefahrenen Konfiguration kann die Saugstelle deaktiviert sein, also insbesondere eine Ansaugströmung durch die Saugereinheit unterbrochen sein. Eine solche Ausgestaltung hat den Vorteil, dass die aktivierte Saugstellen über die sie umgebenden (deaktivierten) Saugstellen hervorstehen, sodass der Sauggreifer auf einfache Weise das Greifobjekt selektiv mit den aktivierten Saugstellen kontaktieren kann (Verschleißreduktion).

Die Erfindung betrifft auch einen Sauggreifer zur Verwendung in einer vorstehend beschriebenen Unterdruckhandhabungsvorrichtung.

Die Erfindung wird im Folgenden anhand der Figuren näher erläutert. Es zeigen:
- Fig. 1: vereinfachte schematische Darstellung einer Unterdruckhandhabungsvorrichtung;
- Fig. 2: den Sauggreifer der Unterdruckhandhabungsvorrichtung gemäß Figur 1 in einer Untersicht;
- Fig. 3: skizzierte Darstellung einer beispielhaften Ausgestaltung eines Sauggreifers in einer perspektivischen Untersicht;
- Fig. 4: der Sauggreifer gemäß Figur 3 in verschiedenen Funktionsstellungen in einer Seitenansicht;
- Fig. 5: eine Greifvorrichtung umfassend mehrere Sauggreifer gemäß Figur 3; und
- Fig. 6: Flussdiagramm zur Erläuterung eines beispielhaften Verfahrens zum Handhaben eines Greifobjektes mittels der Unterdruckhandhabungsvorrichtung gemäß Figur 1.

In der nachfolgenden Beschreibung sowie in den Figuren sind für identische oder einander entsprechende Merkmale jeweils dieselben Bezugszeichen verwendet.

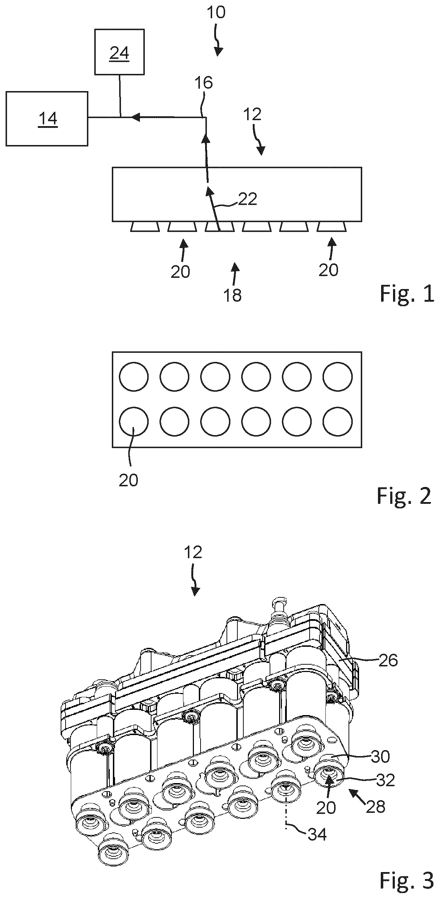

Die Figur 1 zeigt in vereinfachter schematischer Darstellung eine Unterdruckhandhabungsvorrichtung, welche insgesamt mit dem Bezugszeichen 10 bezeichnet ist. Die Unterdruckhandhabungsvorrichtung 10 weist einen Sauggreifer 12 und eine Unterdruckerzeugungseinrichtung 14 zur Versorgung des Sauggreifers 12 mit Unterdruck auf. Die Unterdruckerzeugungseinrichtung 14 ist über eine Fluidleitung 16 mit dem Sauggreifer 12 strömungsverbunden.

Die Unterdruckerzeugungseinrichtung 14 kann unterschiedlich ausgebildet sein, bspw. als Gebläse oder Pumpe. Vorzugsweise handelt es sich bei der Unterdruckerzeugungseinrichtung 14 um einen Ejektor zur Erzeugung von Unterdruck aus Druckluft.

Der Sauggreifer 12 weist an einer Saugseite 18 eine Mehrzahl von Saugstellen 20 zum Ansaugen eines Greifobjektes auf. Im Beispiel umfasst der Sauggreifer 12 zwölf Saugstellen 20, welche in einem regelmäßigen Raster angeordnet sind. Bei nicht dargestellten Ausgestaltungen kann eine Konfiguration der Saugstellen 20 variieren. Beispielsweise können mehr oder weniger Saugstellen 20 vorgesehen sein. Die Saugstellen 20 können auch unregelmäßig verteilt angeordnet sein.

Die Saugstellen 20 sind über die Unterdruckerzeugungseinrichtung 14 mit Unterdruck versorgbar. Ein Ansaugströmungsweg 22 (in Figur 1 beispielhaft durch die Pfeile angedeutet) verläuft dabei beispielhaft von den Saugstellen 20 durch die Fluidleitung 16 zu der Unterdruckerzeugungseinrichtung 14.

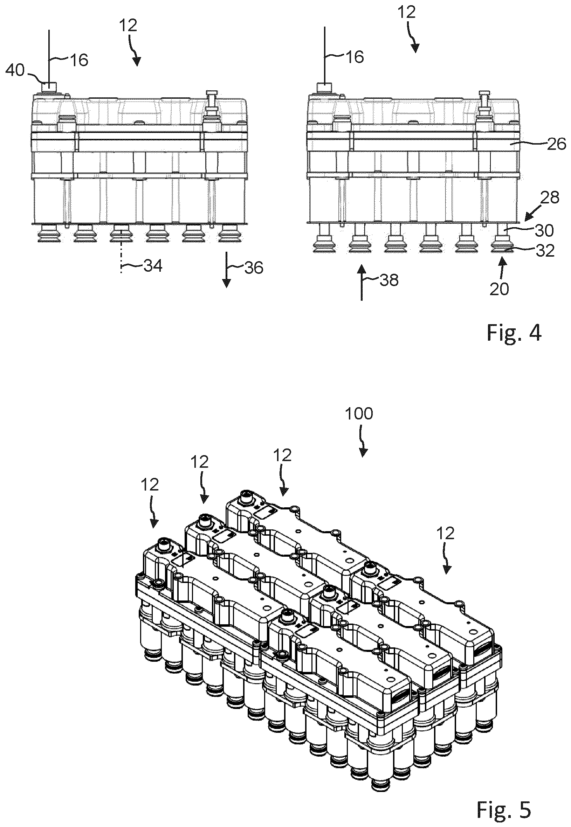

Der Sauggreifer 20 ist derart ausgebildet, dass die Saugstellen 20 einzeln, d.h. voneinander unabhängig, aktivierbar (dann saugen sie an) und deaktivierbar (dann saugen sie nicht an) sind. Dies kann auf unterschiedliche Weise realisiert sein. Beispielsweise ist es denkbar, dass in dem Sauggreifer 12 eine Ventileinrichtung (nicht dargestellt) vorgesehen ist, welche dazu ausgebildet ist, einen Strömungsweg zwischen den Saugstellen 20 und einem mit der Unterdruckerzeugungseinrichtung 14 verbundenen Unterdruckanschluss freizugeben oder abzusperren. Eine beispielhafte Realisierungsform wird nachfolgend unter Bezugnahme auf die Figuren 3 und 4 beschrieben. Die Erfindung ist allerdings nicht auf diese Ausgestaltung beschränkt.

Wie vorstehend erwähnt, ist der Sauggreifer 20 zudem derart ausgebildet, dass bei freiem Ansaugen ohne Greifobjekt der in dem Ansaugströmungsweg vorherrschende Unterdruck von der Anzahl an aktivierten Saugstellen abhängt, wobei die gleiche Anzahl an aktivierten Saugstellen - unabhängig davon, welche Saugstellen der Mehrzahl von Saugstellen aktiviert sind - stets zu dem gleichen Unterdruck in dem Ansaugströmungsweg führt und wobei eine unterschiedliche Anzahl an aktivierten Saugstellen zu einem unterschiedlichen Unterdruck in dem Ansaugströmungsweg führt.

Die Unterdruckhandhabungsvorrichtung 10 umfasst außerdem eine Sensoreinrichtung 24 zum Messen eines Unterdrucks in dem Ansaugströmungsweg 22. Im Beispiel ist die Sensoreinrichtung 24 dazu eingerichtet, einen Unterdruck in der Fluidleitung 16 zu messen. Bei nicht dargestellten Ausgestaltungen kann die Sensoreinrichtung 24 auch dazu ausgebildet sein, den Unterdruck in einem Ansaugbereich der Unterdruckerzeugungseinrichtung 14 zu messen und/oder im Sauggreifer 12. Die Sensoreinrichtung 24 kann einen oder mehrere Drucksensoren umfassen.

Die Unterdruckhandhabungsvorrichtung 10 kann optional auch einen Manipulator (nicht dargestellt), bspw. Roboter, zum Verlagern des Sauggreifers 12 umfassen.

Die Unterdruckhandhabungsvorrichtung 10 kann optional außerdem eine Erfassungseinrichtung, bspw. Kamera, zum Erfassen eines Greifobjektes aufweisen.

Die Unterdruckhandhabungsvorrichtung 10 umfasst vorzugsweise außerdem eine Steuereinrichtung (nicht dargestellt) zum Ansteuern der Unterdruckhandhabungsvorrichtung 10, insbesondere der Unterdruckerzeugungseinrichtung 14 und des Sauggreifers 12. Beispielsweise kann die Steuereinrichtung dazu eingerichtet sein eine Ventileinrichtung des Sauggreifers 12 anzusteuern, um die Saugstellen 20 bedarfsweise zu aktivieren. Die Steuereinrichtung umfasst vorzugsweise eine nicht-flüchtige Speichereinrichtung, auf welcher Steueranweisungen gespeichert sind, welche bei Ausführung durch die Steuereinrichtung, insbesondere durch eine Datenverarbeitungsanlage der Steuereinrichtung, diese dazu veranlassen, die Unterdruckhandhabungsvorrichtung 10 anzusteuern, insbesondere das nachfolgend erläuterte Verfahren auszuführen.

Die Figur 3 zeigt in skizzierter Darstellung eine beispielhafte Ausgestaltung eines Sauggreifers 12. Der Sauggreifer 12 umfasst einen Greifergrundkörper 26 und eine Mehrzahl, im dargestellten Beispiel zwölf, Saugereinheiten 28, welche jeweils eine Saugstelle 20 bereitstellen.

Jede Saugereinheit 28 umfasst einen Hubkolben 30 und einen mit dem Hubkolben 30 bewegungsgekoppelten Saugkörper 32, bspw. Faltenbalgsauger. Die Saugereinheit 28 ist entlang einer Hubachse 34 verlagerbar an dem Greifergrundkörper 26 gehaltert und in einer Ausfahrrichtung 36 (vgl. Figur 4) und in einer zu der Ausfahrrichtung 36 entgegengesetzten Einfahrrichtung 38 verstellbar, sodass die Saugereinheit 28 eine relativ zu dem Greifergrundkörper 26 eingefahrene Passivkonfiguration (vgl. Figur 4 links) und eine relativ zu dem Greifergrundkörper 26 ausgefahrene Aktivkonfiguration (vgl. Figur 4 rechts) einnehmen kann.

Wie aus Figur 4 ersichtlich, sind die Saugereinheiten 28 an dem Greifergrundkörper 26 vorzugsweise derart gehaltert, dass die Hubachsen 34 der Saugereinheiten 28 zueinander parallel verlaufen.

Die Saugereinheiten 28 sind derart ausgebildet, dass in der eingefahrenen Passivkonfiguration eine Ansaugströmung durch die Saugereinheit 28 gesperrt ist (also die Saugstelle 20 deaktiviert ist) und in der ausgefahrenen Aktivkonfiguration eine Ansaugströmung durch die Saugereinheit 28 freigegeben ist (also die Saugstelle 20 aktiviert ist).

Das Aktivieren oder Deaktivieren der Saugereinheiten 28 / Saugstellen 20 kann durch Freigeben oder Unterbrechen einer Unterdruckversorgung der Saugereinheiten 28 realisiert sein. Beispielsweise ist es denkbar, dass der Sauggreifer 12 eine oder mehrere Ventileinrichtungen (nicht dargestellt) zur Steuerung einer Unterdruckversorgung der Saugereinheiten 28 aufweist. Beispielhaft kann das der Sauggreifer 12 einen Unterdruckanschluss 40 aufweisen, über welchen der Sauggreifer 12 Unterdruck versorgbar ist. Die Ventileinrichtung kann dann beispielsweise dazu eingerichtet sein, eine Strömungsverbindung zwischen dem Unterdruckanschluss 40 und den Saugereinheiten 28 einzeln freizugeben oder abzusperren.

Der Sauggreifer 12 kann insbesondere auch eine elektrische Schnittstelle aufweisen, über welche bspw. die Ventileinrichtungen mit Strom versorgbar sind. Darüber hinaus ist es denkbar, dass über die elektrische Schnittstelle Steuerbefehle von einer übergeordneten Steuereinrichtung, insbesondere der Steuereinrichtung der Unterdruckhandhabungsvorrichtung, an die Ventileinrichtungen übertragen werden.

Der Sauggreifer 12 kann zusätzlich eine eigene Steuereinrichtung (nicht dargestellt) zur Ansteuerung der Ventileinrichtungen umfassen. Dann kann die elektrische Schnittstelle bspw. dazu ausgebildet sein, um die integrierte Steuereinrichtung mit der übergeordneten Steuereinrichtung zu verbinden.

Es ist denkbar, dass mehrere der vorstehend beschriebenen Sauggreifer 12 zu einer übergeordneten Sauggreifvorrichtung 100 zusammengefasst sind. Eine beispielhafte Ausgestaltung einer solchen Sauggreifvorrichtung ist in Figur 5 dargestellt und insgesamt mit dem Bezugszeichen 100 versehen. Wie aus Figur 5 ersichtlich, sind die Sauggreifer 12 in der Sauggreifvorrichtung 100 insbesondere derart nebeneinander angeordnet, dass eine ebene Saugfläche gebildet ist.

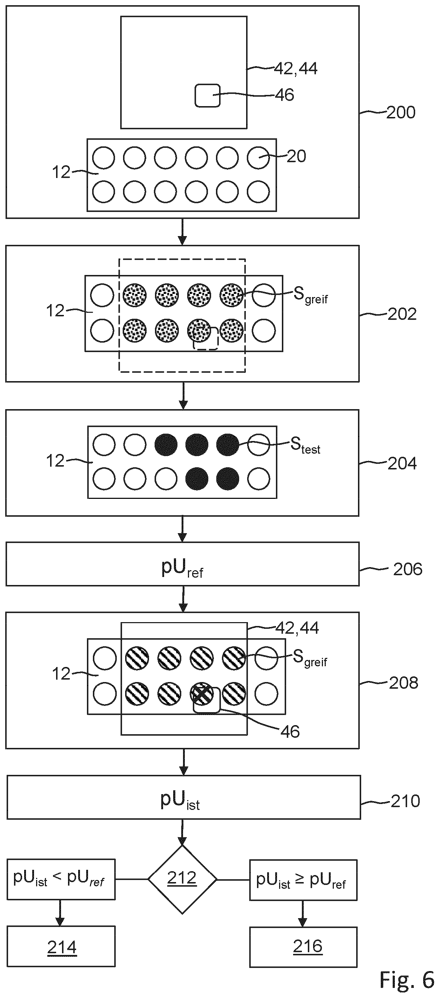

Ein beispielhaftes Verfahren zum Betreiben einer vorstehend beschriebenen Unterdruckhandhabungsvorrichtung 10 wird nachfolgend unter Bezugnahme auf die Figur 6 erläutert. Gemäß dem Verfahren soll ein Greifobjekt 42 mittels des Sauggreifers 12 angesaugt und ggf. verlagert werden.

Gemäß dem Verfahren wird zunächst die Unterdruckhandhabungsvorrichtung 10 und das Greifobjekt 42 bereitgestellt (vgl. Block 200 in Figur 6). Beispielhaft wird das Verfahren anhand des Sauggreifers 12 gemäß Figur 1 mit zwölf Saugstellen 20 beschrieben. Das Verfahren ist aber nicht auf eine solche Ausgestaltung des Sauggreifers 12 beschränkt. Insbesondere ist es auch denkbar, dass eine Sauggreifvorrichtung 100 gemäß Figur 5 mit mehreren Sauggreifern 12 eingesetzt wird.

Das Greifobjekt 42 ist beispielhaft als Flachmaterial, insbesondere Blech 44, ausgebildet. Zur Erläuterung bestimmter Aspekte des Verfahrens umfasst das Greifobjekt 42 beispielhaft eine lokale Aussparung 46. Bei nicht dargestellten Ausgestaltungen kann das Greifobjekt 42 aber auch beliebige andere Konfigurationen einnehmen.

In einem weiteren Schritt (vgl. Block 202 in Figur 6) wird eine Anzahl n_{greif} an Saugstellen 20 und insbesondere eine konkrete Auswahl an Saugstellen S_{greif} ermittelt, mittels welchen das Greifobjekt 42 gegriffen werden soll. Die Anzahl n_{greif} und die Konfiguration der Saugstellen S_{greif} kann insbesondere in Abhängigkeit einer Geometrie, insbesondere Außenkontur, des Greifobjektes 42 ermittelt sein. Beispielsweise kann es sich bei den Saugstellen S_{greif} um die maximal mögliche Anzahl an Saugstellen 20 handeln, welche auf dem Greifobjekt 42 platziert werden können. Als weitere Randbedingung kann eine gewünschte Orientierung des Greifobjektes 42 an dem Sauggreifer 12 bei der Ermittlung der Saugstellen S_{greif} berücksichtigt werden.

Wie vorstehend erwähnt, kann beispielsweise das Greifobjekt 42 mittels einer Erfassungseinrichtung, bspw. umfassend eine Kamera, charakterisiert und insbesondere eine Außenkontur und/oder eine Innenkontur des Greifobjektes 42 mittels Methoden der Bildverarbeitung ermittelt werden.

Im konkreten Beispiel gemäß Figur 6 soll das Greifobjekt 42 mit acht Saugstellen (in Block 202 gepunktet markiert) gegriffen werden, was im Beispiel der maximal möglichen Anzahl an Saugstellen 20 entspricht, die das Greifobjekt 42 aufgrund dessen Ausdehnung kontaktieren können. Insofern beträgt n_{greif} acht.

Darüber hinaus wird eine Anzahl n_{erf} ermittelt oder bereitgestellt, welche die Anzahl an minimal erforderlichen Saugstellen 20 angibt, um das Greifobjekt 42 sicher zu greifen. Wie vorstehend erwähnt, kann die Anzahl n_{erf} insbesondere in Abhängigkeit eines Gewichts des Greifobjektes 42 und optional unter weiteren Randbedingungen, wie bspw. zu erwartende Beschleunigungs- oder Bearbeitungskräften während eines durchzuführenden Arbeitsprozesses, ermittelt werden. Im Beispiel sind zum sicheren Greifen drei Saugstellen 20 erforderlich. Insofern beträgt n_{erf} drei.

In einem weiteren Schritt (Block 204 in Figur 6) wird sodann eine Anzahl nₜₑₛₜ an Saugstellen Sₜₑₛₜ aktiviert ohne ein Greifobjekt anzusaugen (freies Saugen). Die Anzahl nₜₑₛₜ entspricht dabei der Differenz zwischen n_{greif} und n_{erf}, im konkreten Beispiel gemäß Figur 6 also: nₜₑₛₜ = 8-3 = 5. Die aktivierten und frei ansaugenden (Test-)Saugstellen Sₜₑₛₜ sind in Figur 6 schwarz dargestellt. Die in Figur 6 gezeigte Auswahl an aktivierten(Test-)Saugstellen Sₜₑₛₜ ist lediglich beispielhaft. Wie vorstehend erwähnt, können beliebige fünf Saugstellen 20 aktiviert werden. insbesondere muss es sich bei den Test-Saugstellen Sₜₑₛₜ nicht zwingend um eine Teilmenge der Saugstellen S_{greif} handeln.

Sind die Saugstellen Sₜₑₛₜ aktiviert, wird mittels der Sensoreinrichtung 24 der Unterdruck pUₜₑₛₜ gemessen, welcher sich in dem Ansaugströmungsweg 22 (bspw. in der Fluidleitung 16) einstellt (Block 206 in Figur 6). Der Unterdruck pUₜₑₛₜ repräsentiert insofern den Unterdruck, der sich einstellen würde, wenn bei einem späteren Greifen des Greifobjektes 42 mit den (im Beispiel acht) Saugstellen S_{greif} fünf der acht aktivierten Saugstellen S_{greif} nicht oder zumindest nicht zuverlässig ansaugen, mit anderen Worten also lediglich n_{erf} (im Beispiel: drei) der n_{greif} (im Beispiel: acht) aktivierten Saugstellen S_{greif} das Greifobjekt 42 tatsächlich ansaugen. Der Unterdruckwert pUₜₑₛₜ repräsentiert insofern einen Grenz-Unterdruck, welcher bei späterer Aktivierung der Saugstellen S_{greif} mindestens erzielt werden muss, um sicherzugehen, dass das Greifobjekt 42 sicher gegriffen ist.

Der Unterdruckwert pUₜₑₛₜ wird sodann als Referenz-Unterdruck pU_{ref} in der nicht-flüchtigen Speichereinrichtung der Steuereinrichtung hinterlegt.

Wie vorstehend erwähnt, ist es alternativ auch denkbar, dass der Unterdruckwert pUₜₑₛₜ reduziert um einen Korrekturfaktor pUₖₒᵣᵣ als Referenz-Unterdruck pU_{ref} gespeichert wird.

Ebenfalls ist denkbar, dass die Schritte 204 und 206 nicht durchgeführt werden, sondern für jede Anzahl von aktivierten Saugstellen 20 ein Referenz-Unterdruckwert pU_{ref} bereits in einer Datenbank in der Speichereinrichtung hinterlegt ist (siehe oben).

In einem weiteren Schritt (Block 208 in Figur 6) werden sodann die Saugstellen S_{greif} aktiviert und das Greifobjekt 42 angesaugt (zur Abgrenzung zum freien Saugen gemäß Block 204 sind die Saugstellen S_{greif} in Block 208 gestrichelt eingezeichnet).

Sodann wird - nach Ansaugen des Greifobjektes 42 - erneut der Unterdruck pUᵢₛₜ in dem Ansaugströmungsweg 22 mittels der Sensoreinrichtung 24 gemessen (Block 210 in Figur 6).

Dieser Unterdruckwert pUᵢₛₜ wird sodann mit dem Referenz-Unterdruckwert pU_{ref} verglichen (vgl. Block 212 in Figur 6).

Ist der Unterdruckwert pUᵢₛₜ kleiner als der Referenz-Unterdruckwert pU_{ref} kann hieraus geschlossen werden, dass weniger als die erforderliche Anzahl n_{erf} an Saugstellen 20 das Greifobjekt 42 ansaugen (also mehr Saugstellen 20 als nₜₑₛₜ nicht ansaugen). In diesem Fall kann optional ein Fehlersignal ausgegeben werden (vgl. Block 214 in Figur 6). Beispielsweise kann das Fehlersignal die Steuereinrichtung dazu veranlassen, einen Ansaugvorgang abzubrechen.

Ist der Unterdruckwert pUᵢₛₜ gleich oder größer als der Referenz-Unterdruckwert pU_{ref} kann hieraus geschlossen werden, dass ausreichend Saugstellen 20, also eine n_{erf} entsprechende Anzahl oder eine größere Anzahl als n_{erf} an Saugstellen, das Greifobjekt 42 tatsächlich ansaugen und somit das Greifobjekt 42 sicher gegriffen ist. In diesem Fall kann optional ein Freigabesignal ausgegeben werden. Das Freigabesignal kann beispielsweise die Steuereinrichtung dazu veranlassen, einen Handhabungsprozess (bspw. umfassend das Verlagern des an dem Sauggreifer 12 gehaltenen Greifobjektes 42) zu starten.

In dem skizzierten Beispiel gemäß Figur 6 saugt lediglich eine der Saugstellen S_{greif} nicht oder nicht zuverlässig an, nämlich die Saugstelle, die an der Aussparung 46 positioniert ist (in Block 208 mit schwarzem Kreuz markiert). Insofern saugen im Beispiel sieben der acht aktivierten Saugstellen S_{greif} zuverlässig an, also mehr als zwingend erforderlich (mehr als n_{erf}). Folglich ist Unterdruckwert pUᵢₛₜ im Beispiel größer als der Unterdruckwert pU_{ref} und es wird optional ein Freigabesignal ausgegeben.

## Patentansprüche

1. Verfahren zum Handhaben eines Greifobjektes (42) mittels einer Unterdruckhandhabungsvorrichtung (10), umfassend
- einen Sauggreifer (12) mit einer Mehrzahl von einzeln aktivierbaren Saugstellen (20) und
- eine Unterdruckerzeugungseinrichtung (14), welche durch einen Ansaugströmungsweg (22) mit dem Sauggreifer (12) verbunden ist, um dem Sauggreifer (12) mit Unterdruck zu versorgen,
wobei der Sauggreifer (12) - zur Ausführung des Verfahrens - derart ausgebildet ist, dass bei freiem Ansaugen ohne Greifobjekt (42) der in dem Ansaugströmungsweg (22) vorherrschende Unterdruck von der Anzahl an aktivierten Saugstellen (20) abhängt, wobei die gleiche Anzahl an aktivierten Saugstellen - unabhängig davon, welche Saugstellen der Mehrzahl von Saugstellen aktiviert sind - stets zu dem gleichen Unterdruck in dem Ansaugströmungsweg führt,
das Verfahren umfassend:
- Bereitstellen eines Referenz-Unterdruckwerts pU_{ref} in einer nicht-flüchtigen Speichereinrichtung,
wobei der Referenz-Unterdruckwert pU_{ref} einen Unterdruck pUₜₑₛₜ repräsentiert, welcher sich bei Aktivierung einer Anzahl nₜₑₛₜ an Saugstellen (20) bei freiem Ansaugen ohne ein Greifobjekt in dem Ansaugströmungsweg (22) einstellt,
wobei nₜₑₛₜ kleiner oder gleich, insbesondere gleich, der Differenz aus n_{greif} und n_{erf} ist,
wobei n_{greif} die Anzahl an Saugstellen S_{greif} repräsentiert, mittels welchen das Greifobjekt (42) zum Greifen angesaugt werden soll,
wobei n_{erf} die Anzahl an minimal erforderlichen Saugstellen repräsentiert, um das Greifobjekt (42) sicher an dem Sauggreifer (12) zu halten;
- Aktivieren der Saugstellen Sgreif und Ansaugen des Greifobjektes (42);
- Messen eines Unterdruckwertes pUᵢₛₜ, welcher einen sich nach dem Ansaugen des Greifobjektes (42) mit den Saugstellen Sgreif in dem Ansaugströmungsweg (22) einstellenden Unterdruck repräsentiert und Vergleichen des Unterdruckwerts pUᵢₛₜ mit dem Referenz-Unterdruckwert pU_{ref}.

2. Verfahren nach Anspruch 1, wobei das Bereitstellen des Referenz-Unterdruckwerts pU_{ref} umfasst, insbesondere unmittelbar vor dem Aktivieren der Saugstellen S_{greif}:
- Aktivieren einer nₜₑₛₜ entsprechenden Anzahl an Saugstellen Sₜₑₛₜ ohne ein Greifobjekt (42) anzusaugen,
- Messen eines Unterdruckwertes pUₜₑₛₜ, welcher einen sich nach Aktivieren der Saugstellen Sₜₑₛₜ in dem Ansaugströmungsweg (22) einstellenden Unterdruck repräsentiert, und Speichern dieses Unterdruckwerts pUₜₑₛₜ oder dieses Unterdruckwerts pUₜₑₛₜ reduziert um einen Korrekturfaktor pUₖₒᵣᵣ als Referenz-Unterdruckwert pU_{ref} in der Speichereinrichtung.

3. Verfahren nach Anspruch 1 oder 2, wobei, wenn die Differenz aus n_{greif} und n_{erf} größer ist als ein Schwellwert nₛ, lediglich die Anzahl nₛ an Saugstellen Sₜₑₛₜ aktiviert wird.

4. Verfahren nach einem der vorherigen Ansprüche, wobei, wenn der Unterdruckwert pUᵢₛₜ geringer ist als der Referenz-Unterdruckwert pU_{ref}, ein Fehlersignal ausgegeben wird.

5. Verfahren nach einem der vorherigen Ansprüche, wobei n_{erf} in Abhängigkeit einer oder mehrerer der folgenden Randbedingungen ermittelt ist:
- ein Gewicht des Greifobjektes (42);
- ein Material des Greifobjektes (42);
- zu erwartende Beschleunigungskräfte oder Bearbeitungskräfte während eines nach dem Ansaugen des Greifobjektes (42) durchgeführten Arbeitsprozesses.

6. Verfahren nach einem der vorherigen Ansprüche, wobei n_{greif} und insbesondere S_{greif} in Abhängigkeit einer Geometrie des Greifobjektes (42) ermittelt ist.

7. Unterdruckhandhabungsvorrichtung (10), insbesondere zum Ausführen eines Verfahrens nach einem der vorherigen Ansprüche, umfassend:
- einen Sauggreifer (12) mit einer Mehrzahl von einzeln aktivierbaren Saugstellen (20);
- eine Unterdruckerzeugungseinrichtung (14), welche durch einen Ansaugströmungsweg (22) mit dem Sauggreifer (12) verbunden ist, um dem Sauggreifer (12) mit Unterdruck zu versorgen, und
- eine Steuereinrichtung zum Ansteuern der Unterdruckhandhabungsvorrichtung,
wobei der Sauggreifer (12) derart ausgebildet ist, dass bei freiem Ansaugen ohne Greifobjekt (42) der in dem Ansaugströmungsweg (22) vorherrschende Unterdruck von der Anzahl an aktivierten Saugstellen (20) abhängt, wobei die gleiche Anzahl an aktivierten Saugstellen - unabhängig davon, welche Saugstellen der Mehrzahl von Saugstellen aktiviert sind - stets zu dem gleichen Unterdruck in dem Ansaugströmungsweg führt,
wobei die Steuereinrichtung dazu eingerichtet, das Verfahren nach einem der vorherigen Ansprüche durchzuführen.

8. Unterdruckhandhabungsvorrichtung (10) nach dem vorherigen Anspruch, wobei der Sauggreifer (12) derart ausgelegt ist, dass eine Änderung ΔpU_{0→1} des Unterdrucks in dem Ansaugströmungsweg (22), welche sich ergibt, wenn ausgehend von einer Ausgangskonfiguration, in welcher keine Saugstelle (20) aktiviert ist, eine erste Saugstelle (20) aktiviert wird, größer ist als eine Änderung ΔpU_{1→2} des Unterdrucks in dem Ansaugströmungsweg (22), welche sich bei Aktivieren einer weiteren Saugstelle (20) ergibt.

9. Unterdruckhandhabungsvorrichtung (10) nach Anspruch 7 oder 8, wobei der Sauggreifer (12) derart ausgelegt ist, dass eine Änderung ΔpUₓ₊₁ des Unterdrucks in dem Ansaugströmungsweg (22), welche sich bei Aktivieren einer weiteren Saugstelle (20) ergibt, mit steigender Anzahl an bereits aktivierten Saugstellen (20) abnimmt.

10. Unterdruckhandhabungsvorrichtung (10) nach einem der Ansprüche 7 bis 9, wobei der Sauggreifer (12) derart ausgelegt ist, dass eine Änderung ΔpUₓ₊₁ des Unterdrucks in dem Ansaugströmungsweg (22), welche sich bei Aktivieren einer Saugstelle ergibt, größer als 10 mbar, insbesondere größer als 15 mbar, weiter insbesondere größer als 20 mbar ist, zumindest bis ein Drittel der vorhandenen Saugstellen ausgefahren ist.

11. Unterdruckhandhabungsvorrichtung (10) nach einem der Ansprüche 7 bis 10, wobei die Unterdruckerzeugungseinrichtung (14) derart ausgebildet ist, dass in einer Ausgangskonfiguration, in welcher keine Saugstelle (20) aktiviert ist, der Unterdruck im Ansaugströmungsweg (22) konstant ist.

12. Unterdruckhandhabungsvorrichtung (10) nach einem der Ansprüche 7 bis 11, wobei der Sauggreifer (12) eine Mehrzahl von wiederholbar ein- und wieder ausfahrbaren Saugereinheiten (28) aufweist, welche jeweils eine Saugstelle (20) bilden, wobei die Saugstelle (20) in der ausgefahrenen Konfiguration der Saugereinheit (28) aktiviert ist und in der eingefahrenen Konfiguration deaktiviert ist.

13. Sauggreifer (12) zur Verwendung in einer Unterdruckhandhabungsvorrichtung (10) nach einem der Ansprüche 7 bis 12.
